# EUROPEAN PATENT SPECIFICATION

(11) **EP 2 794 054 B1**
(45) Date of publication and mention of the grant of the patent: **07.06.2023**
(21) Application number: 12810400.7
(22) Date of filing: 18.12.2012
(51) Int. Cl.: B01D 24/46, A01K 63/04, C02F 1/00, C02F 1/32, C02F 103/00

(54) **POND FILTERS AND POND FILTER ARRANGEMENTS**
TEICHFILTER UND TEICHFILTERANORDNUNGEN
FILTRES POUR BASSINS ET DISPOSITIF DE FILTRATION POUR BASSIN

(30) Priority: 21.12.2011 GB 201122118
(43) Date of publication of application: 29.10.2014
(73) Proprietor: SA EXEL Industries, 51200 Epernay (FR)
(72) Inventor: BARNARD, Tim, Hucknall Nottingham NG15 6LH (GB); O'TOOLE, John, Smethwick B66 4AW (GB); IACIOFANO, Nicolino, High Wycombe Buckinghamshire HP13 6QS (GB)
(74) Representative: Faulkner, Thomas John
(86) International application number: PCT/GB2012/000913
(87) International publication number: WO 2013/093396

(56) References cited:
- EP-A1- 1 068 888
- EP-A1- 1 068 888
- EP-A2- 0 075 297
- WO-A1-2006/046037
- FR-A- 860 636
- FR-A- 860 636
- GB-A- 903 800
- GB-A- 2 478 276
- GB-A- 2 478 276
- GB-A- 2 478 276
- US-A1- 2005 098 493

## Description

This invention relates to pond filters and pond filter arrangements comprising a pond filter and filter media provided within the pond filter. In particular this invention relates to garden pond filters which are used for filtering water from a pond with the aim of ensuring that the water remains clear and/or the water remains a healthy environment for fish and other aquatic life.

Many different types of pond filters exist and many of these can function effectively. However, in almost all, if not all cases, a problem arises when it comes to filter maintenance. Generally speaking any filter that provides good performance needs cleaning from time to time in order to continue to provide that performance.

Cleaning pond filters is generally a relatively unattractive process for the consumer/user of the pond filter. This can lead to pond filters not being cleaned as frequently as is advisable.

One type of pond filter includes a ring or doughnut of open celled foam which acts as a mechanical and biological filter. One such filter is described in EP 0 899 237. Such filters can be very effective and the filtering medium is ideal but the doughnut of foam can be difficult and messy to clean leading to the problems mentioned above,

GB 903,800 describes a swimming pool filter in which shredded foamed synthetic plastic is used as a filter material. Agitation means are provided for swirling the filter material in its container during cleaning.

GB 2478276 describes a pond filter with agitation means provided for agitating filter media during cleaning. It describes different types of filter media used in pre-existing filters. Another filter suitable for ponds is disclosed in US 2005/098493 A1.

Filter medias other than the open celled foam will tend to be easier to clean but are less effective.

It is an aim of the present invention to provide a pond filter which functions effectively and it is a further aim to provide a pond filter which is convenient to clean.

According to a first aspect of the present invention there is provided a pond filter arrangement as claimed in claim 1.

The foam portions can rest together during filtering to provide an effective filter but can be disturbed and dissociated from one another during cleaning to assist in cleaning. The relative movement can be in any direction and can be translational movement of a whole element relative to the housing and at least one other element. To put this another way, the filter arrangement may be arranged so that movement of the foam portions within the chamber is unconstrained.

The pond filter arrangement may be arranged so that the foam portions tend to form a cake during filtering and, arranged so that if so, the agitation member tends to break up the cake during cleaning.

The foam portions may be chopped foam portions. The foam portions may be blocks. The foam portions may be polyhedrons, in particular cubes or cuboids.

The foam portions may be small relative to the chamber in which they are held. Each foam portion preferably has a volume that is 5% or less of the volume of the chamber, more preferably 1% or less, in some embodiments 0.5% or less or even 0.1% or less. These comparisons relate to the natural volume of the foam portion as introduced to the chamber rather than after squashing.

The foam portions may be dimensioned so that a plurality of the foam portions may be arranged side by side along any direction across the chamber. The foam portions may be dimensioned so that at least five of the foam portions may be arranged side by side along any direction across the chamber.

The maximum dimension of each foam portion may be 50mm, preferably 20mm.

The porosity of the foam may be in the range of 4 to 16 pores per cm (10 to 40 pores per inch), more preferably in the range of 4 to 10 pores per cm (10 to 25 pores per inch).

There may be a pair of agitation members. A first of the agitation members may be mounted at a first radial distance from the axis and a second of the agitation members may be mounted at a second, different, radial distance from the axis.

This can help ensure that rotation of the agitation members does not just create a clear channel through the filter elements during cleaning.

The pond filter may comprise a generally annular drive plate carrying the agitation member and arranged for rotation about said axis in the housing.

Where there is a pair of agitation members both agitation members may be carried by the plate. The drive plate may be arranged for rotation relative to a tube that passes through a central aperture in the drive plate. The interior of the tube may form part of the flow path from the inlet to the outlet.

The drive plate may be arranged for rotation relative to a UV lamp that passes through the central aperture in the drive plate.

The UV lamp may be disposed in said tube.

A handle may be provided for use in rotatingly driving the drive plate. The handle may be arranged for rotation about an axis that is offset from the axis of rotation of the drive plate and transmission means provided to transfer drive from the handle to the drive plate. The transmission means may comprise a gear driveable by the handle and may comprise a generally annular gear wheel portion which is part of or connected to the annular drive plate.

The pond filter may comprise a bucket portion which at least partly defines the chamber for receiving a plurality of filter media elements. The bucket portion may be removable from the housing. The bucket portion and housing portion may each have engaging portions for mutual engagement with one another when the bucket is in position in the housing to hold the bucket against rotation relative to the housing.

The engaging portions of the bucket portion and housing portion may allow the location of the bucket in the housing in a selected one of a plurality of relatively rotated positions and hold the bucket against rotation relative to the housing in which ever one of the plurality of positions is selected.

This can help ease assembly of the product whilst helping to ensure that functionality is retained.

At least one side wall of the chamber for receiving a plurality of filter media elements is provided with projecting portions. The side wall may be one which runs around the axis about which the agitation member is arranged for rotation.

The elongate projecting portions extend on the side wall transversely to a rotation direction about the axis for which the agitation member is arranged. This feature means that the projecting portions are such that material carried with the agitation members will tend to run up against the projection portions if at the walls of the chamber. Such projecting portions may be generally axially extending if on a curved side wall of the chamber or generally radial if on the axial surface. They will not be purely circumferential.

The projecting portions can help to resist rotation as a whole of a cake of filter elements relative to the chamber and may be dimensioned and arranged to perform this function.

The chamber for receiving a plurality of filter media elements may be generally annular in cross-section. In such a case elongate projecting portions may be provided on one or both of the curved sidewalls of the chamber. This can help resist, during cleaning and rotation of the agitation member, rotation as a whole of an annular cake of filter elements that may build up in the chamber during filtering.

The projecting portions may be provided on at least one side wall of the bucket portion. The bucket portion may be generally annular in cross-section and may have projecting portions on both of the facing curved side walls.

Where the chamber is generally annular, the chamber may have inlets for fluid to be filtered to enter the chamber and outlets for the fluid to leave the chamber with the inlets at one end of the annular chamber and the outlets at the other end of the annular chamber and;
the inlets towards the inner wall of the annular chamber and the outlets towards the outer wall of the annular chamber or the inlets towards the outer wall of the annular chamber and the outlets towards the inner wall of the annular chamber.

This can help ensure fluid passes through the body of the filter media elements in use rather than escaping around the edges.

Apertures to act as inlets and/or outlets may be provided in the bucket portion. Apertures to act as inlets and/or outlets may be provided in the drive plate.

The drive plate may be mounted for rotation on a bearing plate which is mounted in the housing and held against rotation. The bearing plate may be annular and may be mounted on a crown portion having projections which engage with corresponding engaging portions in the bearing plate. The crown portion and corresponding engaging portion may allow the location of the bearing plate on the crown in a selected one of a plurality of relatively rotated positions and hold the bearing plate against rotation relative to the crown in which ever one of the plurality of positions is selected.

This can help ease assembly of the product whilst helping to ensure that functionality is retained.

The crown portion may be provided on the bucket portion.

In one set of embodiments a radial bearing is formed between the bearing plate and the drive plate, the bearing having a pair of bearing faces, one on the bearing plate and one on the drive plate wherein one of the bearing faces has a cylindrical surface whereas the other of the bearing faces has a plurality of radially projecting portions for bearing on said one bearing face.

This arrangement means that there is not a full cylinder to cylinder surface contact in the resulting radial bearing and this helps reduces friction and the risk of the drive plate binding on the bearing plate.

In one set of embodiments one of the bearing plate and the drive plate has an axial bearing surface and the other of the bearing plate and the drive plate has a plurality of projecting portions for bearing on the axial bearing surface for axially supporting the drive plate relative to the bearing plate.

This arrangement means that there is not a full surface to surface contact in the resulting axial bearing and this helps reduces friction and the risk of the drive plate binding on the bearing plate.

The filter may comprise a plurality of filter regions. The filter may comprise a mechanical filter region, a biological filter region and a UV filter region. The flow path through the filter may be from the housing inlet to the UV filter region, then to the biological filter region, then to the mechanical filter region and then to the housing outlet.

The filter may be arranged to encourage circulation of biological filter media elements in the biological filter region. The biological filter media region may be generally annular in cross-section with an inner wall having a flared cylinder or trumpet shape to provide an inwardly curved inner boundary to one end of the annular region. Outlets from the biological filter media region may be provided adjacent to and around the flared end of the cylinder.

Outlets from the biological filter media region may lead to inlets into the chamber for receiving a plurality of filter media elements, which may act as a mechanical filter region.

An outlet from the UV filter region may lead to an inlet into the biological filter media region. A tube in which a UV filter lamp may be disposed may be located inside the flared cylinder.

The filter may be arranged so that fluid passes in the same direction through the filter during filtering and cleaning.

The filter may comprise a diverter valve at the housing outlet to allow fluid to be fed to one hose during filtering and another hose during cleaning.

The housing may have two outlets, one for use during filtering and one for use during cleaning.

With foam portions as the mechanical filter media then in some cases the foam portions can become blocked. This will increase pressure on a high pressure side of the filter media, may reduce the efficiency of filtering and potentially cause failure of device. In traditional ring or doughnut filters of the type descried in EP 0 899 237, the ring will tend to shrink when becoming blocked and subject to increased pressure. This provides a natural route in such filters past the sides of the compressed disc as it becomes blocked. This effect is not seen in the present type of filter carrying foam portions.

The filter may comprise a bypass providing a flow path from the fluid inlet to the fluid outlet that bypasses the chamber for receiving a plurality of filter elements. The bypass may be disposed between the chamber for receiving a plurality of filter elements and said tube. The bypass may comprise an annular passage between a wall of the chamber for receiving a plurality of filter elements and said tube. The bypass may include apertures provided in at least one of the annular drive plate and the bearing plate.

According to another aspect of the present invention there is provided a method of operating a pond filter as claimed in claim 14.

The optional features described above in relation to the first aspect of the invention apply, with any necessary changes in wording, equally as optional features to the other aspects of the invention described above.

Embodiments of the present invention will now be described, by way of example only, with reference to the accompanying drawings in which:
Figure 1 schematically shows a pond filter arrangement;
Figure 2 shows a section through the pond filter arrangement of Figure 1;
Figure 3 shows a top portion of the filter arrangement shown in Figure 1;
Figure 4 shows a bottom portion of the filter arrangement shown in Figure 1;
Figures 5A and 5B schematically show a bucket portion of the filter arrangement shown in Figure 1;
Figures 6A and 6B show different types of filter media used in the filter arrangement of Figure 1;
Figures 7A and 7B are respectively an underside isometric view and a top side isometric view of an annular drive plate of the filter arrangement shown in Figure 1;
Figures 8A and 8B are respectively a top isometric view and an underside isometric view of a bearing plate of the filter arrangement shown in Figure 1;
Figure 9 is a sectional view of the bottom portion of the filter arrangement as shown in Figure 4, but with most of the internal components removed;
Figure 10 shows the bottom portion of the filter arrangement as shown in Figure 4, but with the annular drive plate of Figures 7A and 7B in situ;
Figure 11 shows a modified bearing plate of an alternative filter arrangement similar to that shown in Figures 1 to 10 but including a bypass;
Figure 12 shows a modified annular drive plate of the alternative filter arrangement;
Figure 13 shows the modified annular drive plate in situ; and
Figure 14 shows a cut away of part of the alternative filter arrangement illustrating the bypass.

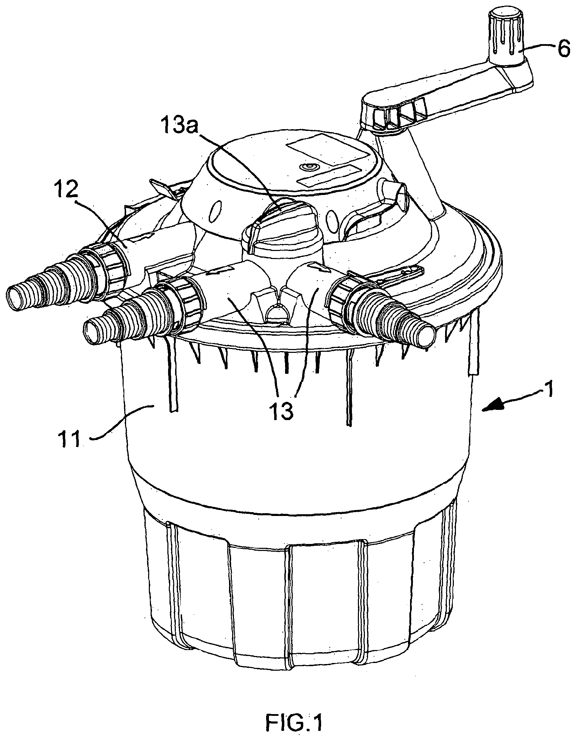

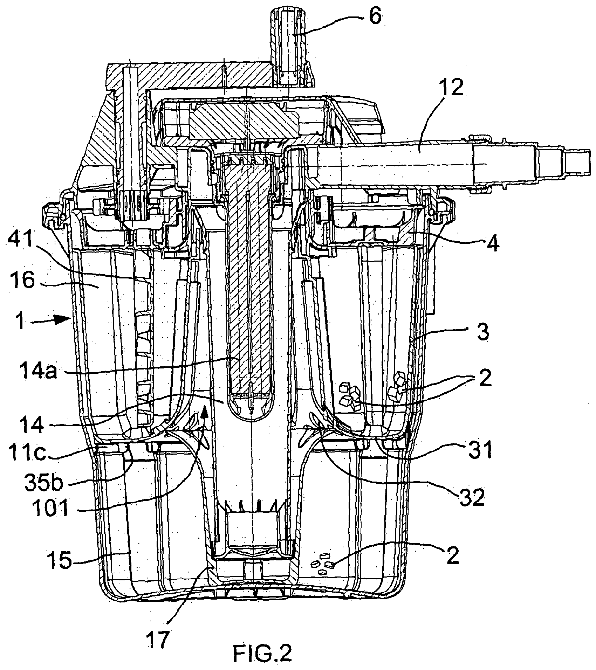

Figures 1 and 2 show a pond filter arrangement which comprises a pond filter 1 and filter media elements 2 provided in respective portions of the pond filter 1.

The pond filter 1 comprises a housing 11 which has an inlet 12 and a pair of outlets 13. Typically the pond filter arrangement will be connected up using hose connected to the inlet 12 and outlets 13 and a pump will be provided for pumping water from the pond with which the filter arrangement is to be used into the inlet 12 through the filter and out of at least one of the outlets 13.

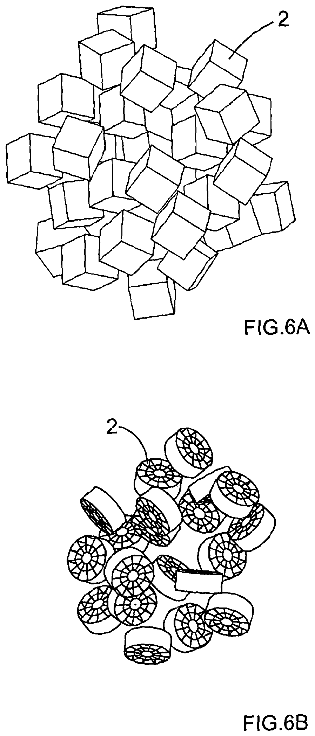

The pond filter 1 comprises three filtering zones. A first UV filtering zone 14 within which a UV lamp 14a is provided, a biological filtering zone 15 within which biological filter media elements 2 of the type shown in Figure 6B are provided and a mechanical filter zone 16 in which filter media elements 2 of the type shown in Figure 6A are provided. Only a few of the filter media elements are shown in position in Figure 2 in the interests of clarity in the drawings. The flow path through the filter 1 is from the inlet 12 through the UV filtering zone 14 into the biological filtering zone 15 and from there into the mechanical filtering zone 16 and from the mechanical filtering zone 16 to the outlets 13.

This flow direction is used in both a filtering mode and cleaning mode of the filter. A diverter valve 13a is provided at the outlet of the housing 11 which is operable to divert flow from the outlet of the housing 11 into a selected one of the outlets 13. As such one of the outlets 13 may be used as a filtering outlet and have a hose connected to it which feeds back to the pond whereas the other outlet 13 may be used as a cleaning outlet and have a hose connected to it which will take the water away to a waste location. Thus a user may use the diverter valve 13a to select the outlet 13 which is used and in particular may put the diverter valve in one position during filtering operation of the filter arrangement and to the other position in cleaning operation of the filter arrangement.

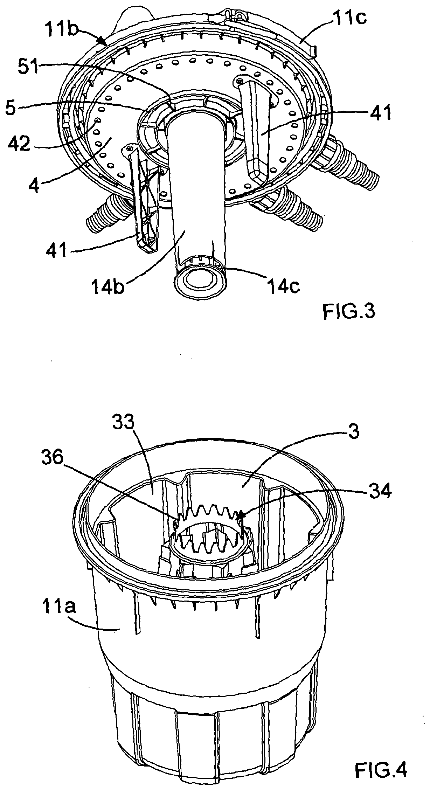

The housing 11 has two main parts, a bottom or container portion 11a and a top or lid portion 11b. These parts are shown separated from one another in Figures 3 and 4. Indeed Figures 3 and 4 show the whole filter arrangement split into two portions - a top portion and a bottom portion. The two housing portions 11a and 11b may be sealed to one another using a fastener 11c for operation of the filter arrangement.

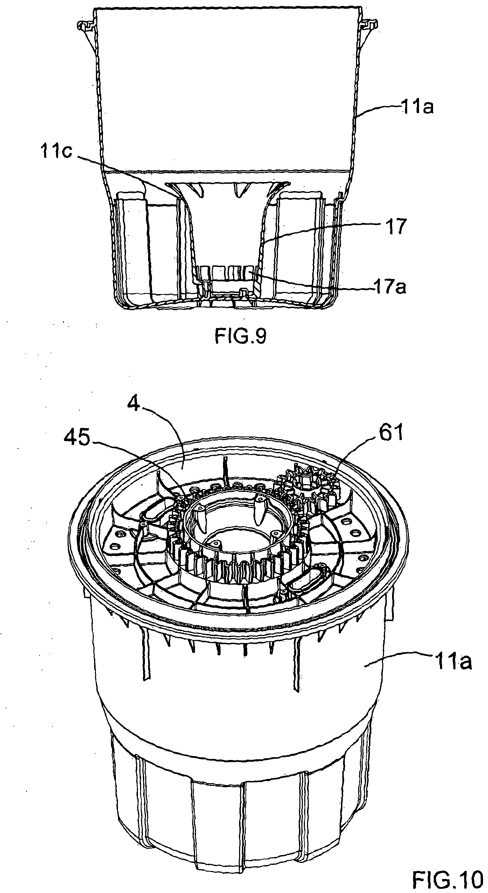

As best seen in Figures 2 and 3 the UV filter zone 14 is partly defined by a tube portion 14b which surrounds the UV lamp and has its interior in fluid communication with the inlet 12. The tube portion 14b projects from the top portion of the filter arrangement down through most of the bottom portion of the filter arrangement. This tube portion 14b is provided along an axis of the generally cylindrical housing portion 1.The distal end of the tube portion 14b which end is remote from the UV lamp 14a is received in a flared cylinder, or trumpet shaped part, 17 provided in the container portion 11a of the housing 1. The container portion 11a including this flared cylinder part 17 are shown in isolation in Figure 9. As can be most clearly seen in Figure 9 apertures 17a are provided in the side wall of this flared cylinder portion 17. These apertures 17a are provided towards the base of the flared cylinder 17 and align with an outlet 14c provided at the end of the tube 14b such that there is a flow path from the interior of the tube portion 14b through the outlet 14c and apertures 17a into the second filtering zone 15.

As mentioned above, the second filtering zone 15 is a biological filtering zone and is provided with filter media elements 2 in the form of biomedia as shown in Figure 6. These biomedia may, for example, be Kaldnes biomedia. These biomedia may be neutrally buoyant, at least after some use, and are provided in the second filtering zone 15 in numbers such that they are free to move around in water in the zone 15 when the filter arrangement is in use. Thus, a moving bed biological filter may be set up in the second zone 15.

The fact that water into the filter 1 feeds directly into the second filter zone 15 via the inlet 12 and tube 14 means that there will tend to be a relatively large flow velocity in the water entering the second filtering zone 15 which can help to generate the moving bed filter. In reality the UV lamp 14a is provided in an inlet passage into the filter such that the second filtering zone 15 is in at least some senses the first chamber into which water is fed.

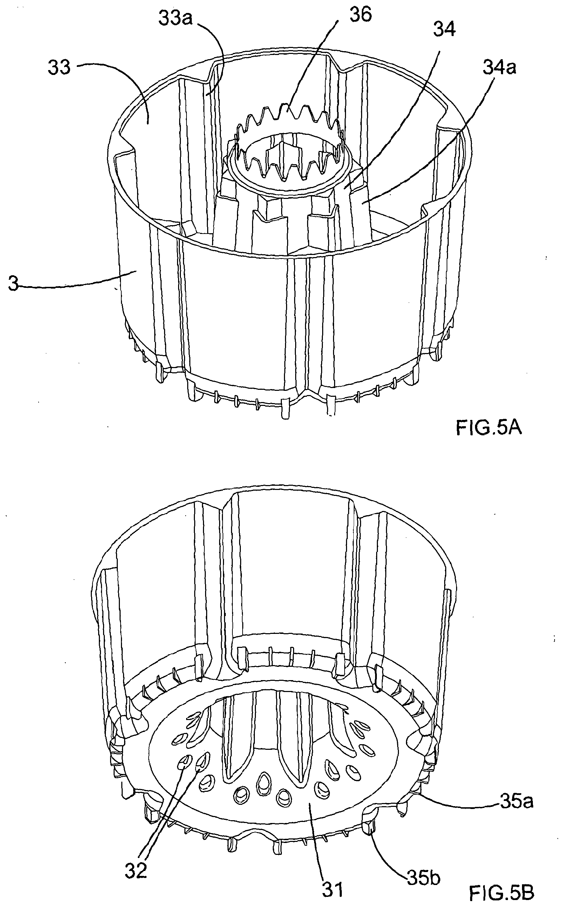

Above the flared cylinder 17 and around the tube 14b there is provided a bucket portion 3. This can be seen in Figure 2 and Figure 4 and is shown in isolation in Figures 5A and 5B. The bucket portion 3 partly defines a chamber which acts as the third filtering zone 16. This is a mechanical filtering zone. The filtration in this zone is provided by a plurality of filter media elements 2 in the form of blocks of foam as shown in Figure 6A and mentioned above. These foam blocks will be described in more detail further below.

A generally annular bottom wall 31 of the bucket portion forms an upper surface (with the filter in its intended orientation for use) of the second filter zone 15. This annular bottom portion 31 curves upwardly at a region where it meets the flared cylinder portion 17. Furthermore, a plurality of apertures 32, as best seen in Figures 2 and 5B, are provided in the bottom wall 31 of the bucket portion 3 in this region which provide a flow path from the second filter region 15 into the third filter region 16. The positioning of these apertures 32 and the flaring of the flared cylinder 17 and to some extent the shape of the bottom surface 31 of the bucket 3 serve to promote circulation of the biomedia 2 in the second filter zone 15 when water is flowing through the filter arrangement.

The second filter zone 15 is generally annular with the outer side wall of that annular zone defined by the housing 11 and the inner side wall defined by the flared cylinder 17.

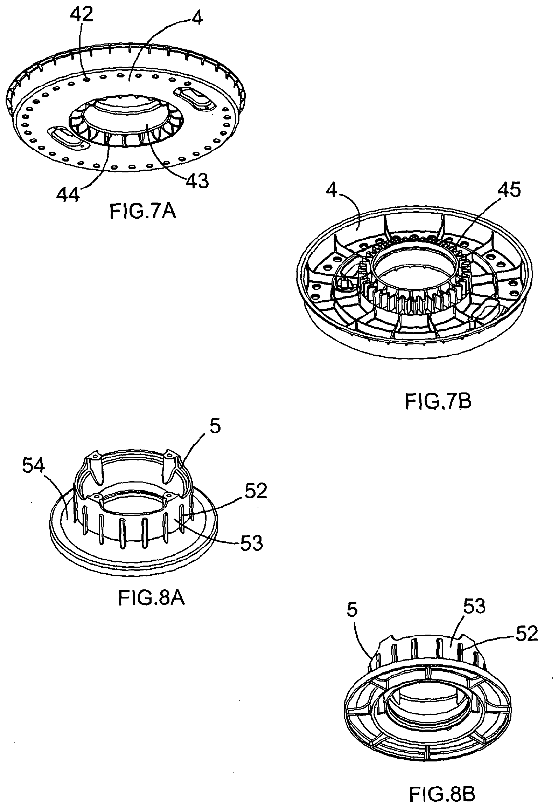

The chamber housing the filter media 2 in the third filter zone 16 as partly defined by the bucket portion 3 is completed by an annular drive plate 4 which can be seen in Figures 2 and 3 and is shown in isolation in Figures 7A and 7B. As such the chamber has outer and inner curved side walls 33, 34 provided by the bucket, a bottom annular wall provided by the bottom portion of the bucket 31 and a top annular wall provided by the annular drive plate 4. The outer curved side wall 33 and curved annular side wall 34 are provided with axially extending projecting portions (or ribs) 33a and 34a.

On the outside of the bucket portion 3 where the outer curved side wall 33 meets the annular bottom portion 31, a plurality of projections 35a and 35b are provided. These are for locating the bucket portion 3 in the container portion 11a of the housing 1. A first set of the projection portions 35a are arranged to rest on suitable ledges in the container portion 11a whereas the other projecting portions 35b are engaging portions arranged to engage with engaging shoulder portions 11c on the container portion 11a, as best seen in Figure 2 and Figure 9. These engaging projections 35b and engaging shoulder portions 11c are provided to give engagement against rotation between the bucket portion 3 and the container portion 11a. When the bucket portion 3 is introduced into the container portion 11a it may be located into one of a selected number of relatively rotated positions. Once engaged into one of these positions, relative rotation between the bucket 3 and the container portion 11a is resisted. When fitting the bucket 3 in the container portion 11a the user will rotate the bucket 3 until the bucket drops some way in the container 11a as each set of the engagement portions 35b on the bucket 3 begins to sit down against a respective (selected) set of the shoulders 11c. Then the bucket 3 may be pushed home to firmly hold the bucket 3 against rotation relative to the container portion 11a. The bucket 3 is later removable if so desired by the user.

The bucket portion 3 has a crown portion 36 provided on the inner curved side wall 34 at its upper end. This crown 34 is arranged for engagement with appropriate engagement portions 51 of a bearing plate 5 on which the drive plate 4 is arranged for rotation. The bearing plate 5 can be seen in Figure 3 and is shown in isolation in Figures 8A and 8B.

In the present embodiment the engaging portions 51 of the bearing plate 5 comprise a plurality of ribs with recesses therebetween. The bearing plate 5 may be located on the crown portion 34 in any relative rotational orientation where each of the ribs 51 aligns with a respective trough in the crown portion 34. Again, this allows the bearing plate 5 to be mounted on the crown 34 and hence bucket portion 3 in a selected one of a number of different relatively rotated positions and held against relative rotation once properly mounted on the crown 34. This again aids the user in assembling the product both initially or after disassembly for maintenance etc. Thus in mounting the top portion of the filter arrangement as shown in Figure 3 on the bottom portion as shown in Figure 4 the top portion may be rotated relative to the bottom portion until the bearing plate 5 drops onto the crown 34 with the ribs 51 locating in respective troughs of the crown portion 34.

As can be seen in Figures 2 and 3 the annular drive plate 4 carries a pair of depending fingers 41 which in the assembled state as shown in Figure 2 project down into the annular chamber provided within the bucket 3. The fingers 41 act as agitation members during cleaning of the filter. The fingers 1 project in a direction which is generally parallel to the axis of the filter 1. One of the fingers 41 is provided at a first radial spacing from the axis of the filter and the other finger 41 is provided at a second radial spacing from the axis of the filter. The first radial spacing is smaller than the second radial spacing.

The drive plate 4 is arranged for rotation about the axis of the filter 1 and as mentioned above is supported for rotation on the bearing plate 5. Because the fingers 41 are provided at a different radial spacing from the axis of rotation it means that as the drive plate 4 is rotated and the fingers 41 move within the bucket 3 they describe different circular paths. This improves their ability to move, disturb and break up filter media elements provided in the bucket portion 3. If the fingers 41 are provided with the same radial spacing from the axis of rotation they can tend just to provide a clear annular path through the filter media whilst leaving the remainder of the volume in the bucket 3 undisturbed.

As mentioned above, the annular drive plate 4 forms an upper surface to the third filter zone 16. A plurality of apertures 42 are provided around the periphery of the annular drive plate 4 and these act as outlets for fluid from the third filter zone 16. There, in practice, is likely also to be a leak path between the edge of the annular drive plate 4 and the edge of the bucket 3 where these two parts meet and touch, or almost touch. However, in practice the amount of fluid leaking through this path tends to be small compared with that which passes through the apertures 42. In any event, it will be noted that the inlets 32 into the third filter zone 16 are at a position towards the (radial) centre of the annular filter zone 16 whereas the outlets are provided towards the outer edge of the annular filter zone 16. This helps ensure that fluids entering into the filter zone 16 tend to pass through the bulk of filter media provided in the zone 16, rather than for example bypassing it up the edge of the bucket 3 which might otherwise occur.

As mentioned above, the annular drive plate 4 is mounted for rotation on the bearing plate 5. The bearing plate 5 provides a radial bearing and an axial bearing for the drive plate 4. The radial bearing exists between a cylindrical bearing face 33 formed in the annular drive plate 4 and a series of projections 52 provided on a cylindrical surface 53 of the bearing plate 5. These parts can be best seen in isolation in Figures 7A and 8A. Of course in the assembled state, as shown for example in Figures 2 and 3 the projections 52 on the bearing plate 5, bear against the cylindrical wall 33 in the annular drive plate 4.

The axial bearing is formed between a curved annular surface 54 on the bearing plate 5 and a plurality of correspondingly curved projecting portions or ribs 44 provided on the annular drive plate 4. Again these features are best seen in isolation in Figures 7A and 8A and it will be appreciated that in the assembled state as shown, for example, in Figure 2 and Figure 3, the ribs 44 bear on the curved bearing surface 54.

Note that in each of these bearings portions, projecting portions or ribs on one component bear on a smooth, or continuous, surface on the other component. This means that there is no direct smooth surface to smooth surface contact between the parts. This is helpful to reduce the resistance to the rotation of the drive plate 4 relative to the bearing plate 5 and helps avoid binding between these two parts which might, for example, occur due to small particles or other debris in the filtered pond water reaching the bearing surfaces.

Figure 10 shows the container portion 11A of the housing with the annular drive plate 4 in position and the remainder of the filter removed so that the drive plate can be seen. As can be seen particularly clearly in Figure 10 and Figure 7 the annular drive plate 4 comprises an annular geared wheel portion 45 provided around the central aperture of the plate 4. This gear wheel portion 45 is provided to allow rotational driving of the annular drive plate 4 by the user operating a rotatingly mounted handle 6, as can be seen in Figures 1 and 2.

The handle 6 is connected to a gear wheel 61 which meshes with the annular gear wheel portion 44 provided on the annular drive plate 4. The handle 6 is arranged for rotation about the axis of the gear wheel 61 which is spaced from the axis of rotation of the drive plate 4. Rotation of the handle 16 causes the annular drive plate 4 to rotate, with the gear wheel 61 and gear wheel portion 45 acting as transmission means for transferring the drive from the handle 6 to the annular drive plate 4.

This arrangement allows for gearing between the handle 6 and the drive plate 4 to ensure that it is not too difficult for the user to rotate the drive plate 4. It also allows the provision of a central passageway down into the filter 1 which in turn allows the UV lamp 14a to be conveniently disposed in the device, and in this embodiment disposed on the axis of the filter 1, leading to a compact design.

As mentioned above, the filter media elements 2 used in the third filter zone 16 which in the present embodiment is arranged to act as a mechanical filter zone, are in the form of a plurality of block shaped foam portions. These are open celled foamed portions. The foam may be of a similar type as used in more conventional foam filters which typically use large pieces, in particular donut-shaped rings of foam material. The foam blocks may for example be cubed-shaped but the precise shape is not of particular importance. However, what is of importance is that there is a plurality and, in particular, a quite large number of foam portions which are provided in the filter chamber and which can move relative to one another during cleaning. Thus strips that may get tangled or shapes that interlock or are trapped against each other during cleaning are unlikely to be desirable.

When significant numbers of such foam portions are provided in a chamber then during filtering they will tend to lump together and also squash together to some degree and provide an effective filtering medium providing good mechanical filtration for fluid passing through the bulk of the foam portions. The bulk of foam portions may also provide some biological filtering function, but that is not their main purpose in at least the present embodiment.

There is some degree of flexibility as to how many foam portions are provided in the filter unit and how full the chamber, for example the bucket 3, is filled with foam portions. However, foam portions should preferably at least form a complete layer across the bottom surface 3 of the bucket in the present embodiment.

In a typical embodiment there are likely to be in excess of 500 foam portions provided in the chamber which receives them. There may indeed be well in excess of 1,000 foam portions.

It will be appreciated that each of the foam portions will be relatively small compared with the chamber and each foam portion in the present embodiment will have a volume which is 0.5% or less, more likely 0.1% or less of the total volume of the chamber in which they are housed, ie the bucket 3. This comment relates to the size of the foam portions as they are originally introduced into the filter unit. They may be compressed to some degree during use. A maximum dimension of each foam portion may be in the order of 50mm but it is preferred that the maximum dimension is perhaps 20mm. Thus in a specific example, the foam portions may be cubes having a side length of 20mm.

The porosity of the foam may be in the range of 4 or 16 pores per centimetre (10 to 40 pores per inch). However, more preferably and in the present embodiment, the porosity of the foam may be in the range of 4 of 10 pores per centimetre (10 to 25 pores per inch). Foam portions having different sizes and/or different porosities may be provided together with one filter arrangement.

In setting up the filter unit lose "handfuls" of foam portions may be put into the appropriate chamber - into the bucket 3 in the present embodiment.

In filtering operation the foam portions will tend to coagulate together and may tend to form a ring or donut-shaped "cake" within the filter unit. Of course as the filter is used for filtering the filter media elements will tend to become dirty and potentially clogged with material. It will be appreciated that as this occurs the elements are likely to cake together.

During filtering operations this caking together can in fact be a positive as the foam portions begin to act as a solid ring of foam providing good filtering as in conventional ring foam type filters.

However, when it is desired to clean the filter having a solid ring of foam is, of course, a disadvantage and such foam rings are difficult to clean and must be removed from the filter unit in a conventional ring foam filter for proper cleaning.

In the present case, however, when it is desired to clean the filter, water should continue to be fed to the filter unit and preferably this should continue to be pond water. However, the user may switch the diverter valve 13a so that the outlet from the filter goes towards a waste site. Then to perform cleaning all that the user needs to do is rotate the handle 6 which will drive the drive plate 4 rotating the fingers 41 around the axis of the filter and in particular through the third filter zone 16 (that is to say the chamber within which the foam portions 2 are provided). As the handle 6 is rotated the fingers 41 will agitate the foam portions 2 and in particular will tend to break up any cake of foam portions which may have built up. Furthermore, at this time the projecting portions 33a and 34a provided on the internal walls of the bucket 3 (that is on the curved side walls of the chamber containing the foam portions) will tend to inhibit any circulation of a cake, of filter media elements as a whole. It will be seen that shearing forces will be set up between the fingers 41 and the projections 33a, 34s which will tend to break up any cake which has formed. Even when there is no cake, the projecting portions 33a and 34a act as surfaces against which foam portions 2 rotated by the fingers 41 will tend to impact.

Thus during the cleaning operation the foam portions 2 may move relative to one another and relative to the housing 11 and to all intents and purposes move in an unconstrained way relative to one another throughout the whole of the chamber within which they are contained. Because of this and with the flow of water through the unit still running extremely effective cleaning can be obtained.

Thus a compact unit may be provided which during filtering can provide filtration which is as good as, if not better, than conventional foam ring based filters and yet effective cleaning can be obtained without having to disassemble any part of the product and without any great difficulty on the part of the user.

Whilst in the present embodiment a removable bucket 3 is provided for the foam portions, this is not essential. The bucket may be fixed or no bucket provided. However, the provision of the bucket makes it easier to mould the projections on the side walls and removably aids the user. The projecting portions on one or each of the bucket side walls may be provided as corrugations in the side wall itself.

It will be noted from the above that the open celled foam portions are compressible.

It has been noted during testing of devices of the type described above that in some cases, when the filter was used without cleaning, the foam filter elements could become clogged. In at least some cases this would cause much reduced flow from the outlet 13 and increased internal pressure. This is undesirable.

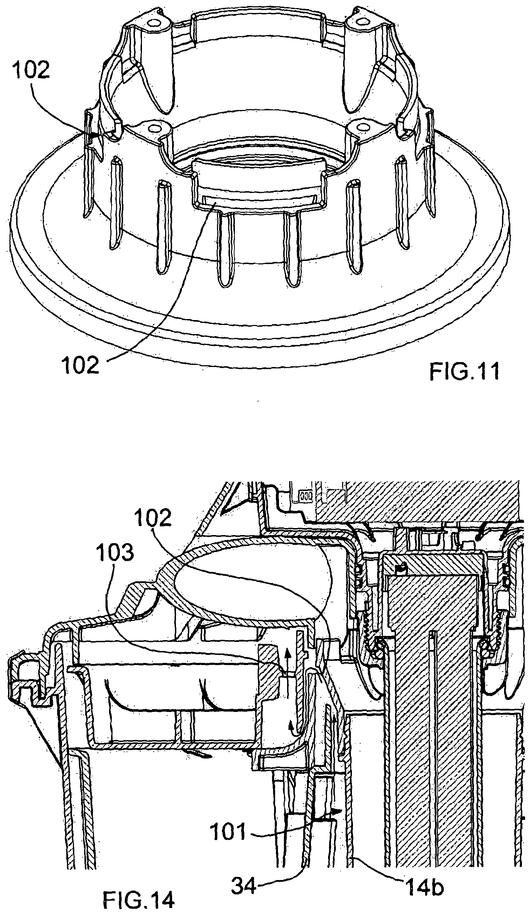

To address this, a bypass for bypassing the foam filter media when these become too clogged can be provided. Figures 11 to 14 show parts of an alternative filter arrangement incorporating such a bypass.

The alternative filter arrangement incorporating a bypass is very similar to the filter arrangement shown in Figures 1 to 10 and described above. Thus detailed description of the alternative arrangement will be omitted, other than to explain the differences between the alternative filter arrangement of Figures 11 to 14 and the above described filter arrangement of Figures 1 to 10. Furthermore, the same reference numerals will be used to indicate the parts common between these two arrangements. Where the alternative filter arrangement includes a modified version of a part included in the filter arrangement described above in relation to Figures 1 to 10, this will be given the same reference numeral with the addition of a prime.

If one considers the main filter arrangement described above, and particularly as shown in Figure 2, it can be seen that there is a generally annular region or passage 101 which exists between the inner annular side wall 34 of the bucket 3 and the wall of the tube portion 14b.

In the filter arrangement of Figures 1 to 10, this region or passage 101 fills with water during use but it is a dead area with basically no flow through it. In the alternative filter arrangement of Figures 11 to 14, this passage 101 is made use of as part of a bypass for bypassing the filter media, in particular foam portions, provided in the bucket 3.

It will be noted that this passage 101 is outside of the bucket 3. That is to say it is outside of the chamber for receiving the plurality of filter elements. The whole bypass is provided outside of the chamber for receiving the plurality of filter elements.

Passage 101 is generally annular in shape and is provided between the wall of the tube portion 14b on one hand and the bucket wall 34 on the other hand.

In the filter arrangement of Figures 1 to 10, as well as the alternative filter arrangement of Figures 11 to 14, this region 101 can fill with water from the biological filtering zone 15 due to fluid paths which exist between the trumpet shaped part 17 and the bucket portion 3 where this rests on the trumpet part shaped part 17.

In the alternative filter arrangement of Figures 11 to 14, the bypass includes apertures 102, 103 in a modified version of the bearing plate 5' and a modified version of the annular drive plate 4'.

Figure 11 shows the modified bearing plate 5'. This includes four apertures 102 (only two of which can be seen in Figure 11) which provide a fluid flow path from one side of the modified bearing plate 5' to the other side.

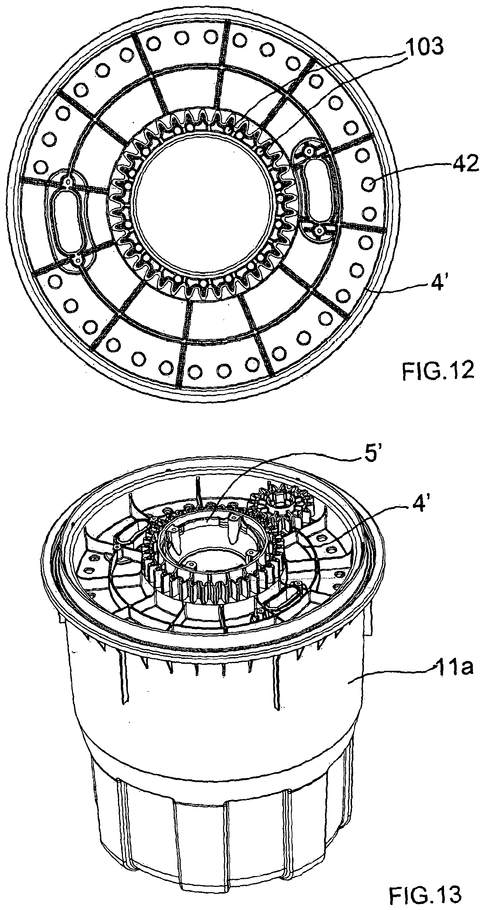

Figure 12 shows the modified annular drive plate 4'. This includes a plurality of additional apertures 103. These are provided towards the centre of the annular drive plate 4' adjacent to the central bore through the drive plate. The additional apertures 103 provide a fluid flow path from one side of the modified annular drive plate 12 to the other side.

Figure 13 shows the modified annular drive plate 4' in situ in the container portion 11a of the filter arrangement and mounted on the modified bearing plate 5'.

The flow path provided by the bypass comprising the passage 101 and the apertures 102, 103 is more clearly visible in Figure 14.

The flow path is indicated by arrows in Figure 14. It runs from the passage 101 into the underside of the body of the bearing plate 5', and from there out of the bearing plate 5' via the apertures 102. From there a flow path is provided between the facing walls of the bearing plate 5' and annular drive plate 4' to an underside of the annular drive plate 4' and from there through the apertures 103 to the upper side of the annular drive plate 4'.

It will be recalled that the normal route for water through the filter arrangement of Figures 1 to 10 is via apertures 42 provided in the annular drive plate 4 towards it outer edge. Once the water is on the upper side of the annular drive plate 4 it is in a collection region where it may be collected and fed to the outlets 13. The same is true for the normal flow route in the alternative arrangement. Thus, once water has passed through the additional apertures 103 provided in the drive plate 4', the bypass is complete and the water flowing through the bypass can rejoin the path of normal flow through the unit.

In normal operation of the alternative filter arrangement of Figures 11 to 14, the main flow path through the unit will be through the bucket 3 and foam filter elements held therein. The flow route through the bypass 101, 102, 103 is a relatively restricted one and thus whilst the foam filtering elements 2 are not blocked, the flow route through the bucket 3 and filtering elements 2 will be a path of lesser resistance and therefore the preferential flow route.

However when the foam filtering elements 2 become blocked and this route becomes more restrictive, the bypass flow route will become a route of lesser resistance at some point. At that point significant fluid flow will begin to pass through the bypass 101, 102, 103, effectively bypassing the filtering elements 2 as they become blocked.

It will be appreciated that the internal pressure in the biological filtering zone 15, at which the bypass becomes a preferential flow route, can be chosen by appropriately designing the bypass and in particular the numbers of and dimensions of the apertures 102, 103, to provide the desired restriction in flow. Thus in this way, the alternative filter arrangement may be designed to begin bypass flow operation at a desired level of internal pressure/filter element blockage.

## Claims

1. A pond filter arrangement comprising:
a pond filter (1) comprising a housing (11) having a fluid inlet (12) and a fluid outlet (13), a chamber (16) within the housing for receiving a plurality of filter media elements (2) and which is disposed in a flow path between the inlet (12) and the outlet (13), and an agitation member (41) disposed in the chamber for agitating carried filter media elements in a cleaning process and
a plurality of filter media elements (2) provided in the chamber,
wherein the filter media elements are compressible open celled foam portions which, under action of the agitation member (41), are free to change location within the chamber (16) and move relative to one another, wherein the agitation member (41) is arranged for rotation, about an axis, within the chamber, and at least one side wall of the chamber for receiving a plurality of filter media elements is provided with projecting elongate portions (33a, 34a) which extend on the side wall transversely to a rotation direction of the agitation member about the axis for resisting rotation of the filter media elements.

2. A pond filter arrangement according to claim 1 in which there is a pair of agitation members (41), a first of the agitation members (41) being mounted at a first radial distance from the axis and a second of the agitation members (41) being mounted at a second, different, radial distance from the axis.

3. A pond filter arrangement according to any preceding claim in which each filter media element (2) has a volume that is 1% or less of the volume of the chamber.

4. A pond filter arrangement according to any preceding claim in which the maximum dimension of each foam portion (2) is 50mm.

5. A pond filter arrangement according to any preceding claim in which the pond filter comprises a generally annular drive plate (4) carrying the agitation member (41) and arranged for rotation about said axis in the housing, wherein the drive plate (4) is arranged for rotation relative to a UV lamp (14a) that passes through a central aperture in the drive plate (4) and the pond filter arrangement comprising a handle (6) for use in rotatingly driving the plate (4), the handle (6) being arranged for rotation about an axis that is offset from the axis of rotation of the drive plate (4) and transmission means (61, 44) being provided to transfer drive from the handle (16) to the drive plate (4).

6. A pond filter arrangement according to any preceding claim which comprises a bucket portion (3) which at least partly defines the chamber for receiving a plurality of filter media elements, wherein the bucket portion (3) is removable from the housing (11), and the bucket portion (3) and housing portion (11) each have engaging portions (35b, 11c) for mutual engagement with one another when the bucket (3) is in position in the housing to hold the bucket (3) against rotation relative to the housing (11).

7. A pond filter arrangement according to claim 6 in which the engaging portions (35b, 11c) of the bucket portion (3) and housing portion (11) allow the location of the bucket in the housing in a selected one of a plurality of relatively rotated positions and hold the bucket against rotation relative to the housing in which ever one of the plurality of positions is selected.

8. A pond filter arrangement according to any preceding claim in which the chamber (16) is generally annular and the chamber has inlets (32) for fluid to be filtered to enter the chamber and outlets (42) for the fluid to leave the chamber with the inlets (32) at one end of the annular chamber and the outlets (42) at the other end of the annular chamber and;
the inlets (32) towards the inner wall of the annular chamber and the outlets (42) towards the outer wall of the annular chamber or the inlets towards the outer wall of the annular chamber and the outlets towards the inner wall of the annular chamber.

9. A pond filter arrangement according to claim 5 or any one of claims 6 to 8 when dependent on claim 5 in which the drive plate (4) is mounted for rotation on a bearing plate (5) which is mounted in the housing and held against rotation, the bearing plate being mounted on a crown portion (34) having projections which engage with corresponding engaging portions (51) in the bearing plate (5), and in which the crown portion (34) and corresponding engaging portions allow the location of the bearing plate on the crown in a selected one of a plurality of relatively rotated positions and hold the bearing plate against rotation relative to the crown in which ever one of the plurality of positions is selected.

10. A pond filter arrangement according to claim 9 in which a radial bearing is formed between the bearing plate (5) and the drive plate (4), the bearing having a pair of bearing faces, one on the bearing plate and one on the drive plate wherein one of the bearing faces has a cylindrical surface whereas the other of the bearing faces has a plurality of radially projecting portions for bearing on said one bearing face.

11. A pond filter arrangement according to any one of claims 9 to 10 in which one of the bearing plate (5) and the drive plate (4) has an axial bearing surface and the other of the bearing plate (5) and the drive plate (4) has a plurality of projecting portions for bearing on the axial bearing surface for axially supporting the drive plate relative to the bearing plate.

12. A pond filter arrangement according to any preceding claim in which the filter comprises a mechanical filter region (16), a biological filter region (15) and a UV filter region (14), the flow path through the filter being from the housing inlet (12) to the UV filter region (14), then to the biological filter region (15), then to the mechanical filter region (16) and then to the housing outlet (12).

13. A pond filter arrangement according to any preceding claim comprising a bypass for allowing water to bypass (101, 102, 103) the plurality of filter media elements provided in the chamber.

14. A method of operating a pond filter (1), the pond filter comprising a housing having a fluid inlet (12) and a fluid outlet (13), a chamber (16) within the housing for receiving a plurality of filter media elements and which is disposed in a flow path between the inlet and the outlet, and an agitation member (41) disposed in the chamber for agitating carried filter media elements in a cleaning process, wherein the agitation member (41) is arranged for rotation, about an axis, within the chamber, and at least one side wall of the chamber for receiving a plurality of filter media elements is provided with projecting elongate portions (33a, 34a) which extend on the side wall transversely to a rotation direction of the agitation member about the axis for resisting rotation of the filter media elements, the method comprising the steps of:
introducing a plurality of compressible open celled foam portions (2) into said chamber (16);
using the filter to filter pond water; and
cleaning the filter, in particular the foam portions (2), by continuing to feed water through the filter whilst using the agitation member (41) to change locations of the foam portions within the chamber and move the foam portions relative to one another so as to break up any cake of foam portions which may have formed during filtering.

## Patentansprüche

1. Teichfilteranordnung, umfassend:
einen Teichfilter (1), umfassend ein Gehäuse (11) mit einem Fluideinlass (12) und
einem Fluidauslass (13), eine Kammer (16) in dem Gehäuse zum Aufnehmen einer Vielzahl von Filtermaterialelementen (2), die in einem Strömungsweg zwischen dem Einlass (12) und dem Auslass (13) angeordnet ist, und ein in der Kammer angeordnetes Agitierelement (41) zum Agitieren von getragenen Filtermaterialelementen in einem Reinigungsprozess, und
eine Vielzahl von Filtermaterialelementen (2), die in der Kammer bereitgestellt sind, wobei es sich bei den Filtermaterialelementen um komprimierbare offenzellige Schaumstoffabschnitte handelt, die unter der Wirkung des Agitierelements (41) ungehindert ihre Lage innerhalb der Kammer (16) ändern und sich relativ zueinander bewegen können, wobei das Agitierelement (41) zur Drehung um eine Achse in der Kammer angeordnet ist und mindestens eine Seitenwand der Kammer zum Aufnehmen einer Vielzahl von Filtermaterialelementen mit vorstehenden langgestreckten Abschnitten (33a, 34a) versehen ist, die sich auf der Seitenwand quer zu einer Drehrichtung des Agitierelements um die Achse erstrecken, um der Drehung der Filtermaterialelemente entgegenzuwirken.

2. Teichfilteranordnung nach Anspruch 1, in der ein Paar Agitierelemente (41) vorhanden ist, wobei ein erstes der Agitierelemente (41) in einem ersten Radialabstand von der Achse angebracht ist und ein zweites der Agitierelemente (41) in einem zweiten, anderen Radialabstand von der Achse angebracht ist.

3. Teichfilteranordnung nach einem der vorangehenden Ansprüche, wobei die Filtermaterialelemente (2) jeweils ein Volumen aufweisen, das 1 % oder weniger des Volumens der Kammer beträgt.

4. Teichfilteranordnung nach einem der vorangehenden Ansprüche, wobei die größte Abmessung jedes Schaumstoffabschnitts (2) 50 mm beträgt.

5. Teichfilteranordnung nach einem der vorangehenden Ansprüche, wobei der Teichfilter eine allgemein ringförmige Antriebsplatte (4) umfasst, die das Agitierelement (41) trägt und zur Drehung um die Achse in dem Gehäuse angeordnet ist, wobei die Antriebsplatte (4) zur Drehung relativ zu einer UV-Lampe (14a), die durch eine mittige Öffnung in der Antriebsplatte (4) läuft, angeordnet ist, und die Teichfilteranordnung einen Griff (6) zur Verwendung beim drehenden Antreiben der Platte (4) umfasst, wobei der Griff (6) zur Drehung um eine Achse angeordnet ist, die von der Drehachse der Antriebsplatte (4) versetzt ist, und wobei Übertragungsmittel (61, 44) bereitgestellt sind, um Antrieb von dem Griff (16) auf die Antriebsplatte (4) zu übertragen.

6. Teichfilteranordnung nach einem der vorangehenden Ansprüche, die einen Kübelabschnitt (3) umfasst, der mindestens teilweise die Kammer zum Aufnehmen einer Vielzahl von Filtermaterialelementen definiert, wobei der Kübelabschnitt (3) aus dem Gehäuse (11) herausnehmbar ist und der Kübelabschnitt (3) und der Gehäuseabschnitt (11) jeweils Eingriffsabschnitte (35b, 11c) zum gegenseitigen Eingriff miteinander, wenn sich der Kübel (3) in dem Gehäuse in Position befindet, aufweisen, um den Kübel (3) gegen Drehung relativ zu dem Gehäuse (11) zu halten.

7. Teichfilteranordnung nach Anspruch 6, wobei die Eingriffsabschnitte (35b, 11c) des Kübelabschnitts (3) und des Gehäuseabschnitts (11) die Positionierung des Kübels in dem Gehäuse in einer ausgewählten einer Vielzahl von relativ gedrehten Stellungen ermöglichen und den Kübel in der jeweiligen ausgewählten der Vielzahl von Stellungen gegen Drehung relativ zu dem Gehäuse zu halten.

8. Teichfilteranordnung nach einem der vorangehenden Ansprüche, wobei die Kammer (16) allgemein ringförmig ist und die Kammer Einlässe (32) zum Eintreten von zu filterndem Fluid in die Kammer und Auslässe (42) zum Austreten des Fluids aus der Kammer mit den Einlässen (32) an einem Ende der ringförmigen Kammer und den Auslässen (42) an dem anderen Ende der ringförmigen Kammer aufweist; und
die Einlässe (32) bei der inneren Wand der ringförmigen Kammer liegen und die Auslässe (42) bei der äußeren Wand der ringförmigen Kammer liegen oder die Einlässe bei der äußeren Wand der ringförmigen Kammer liegen und die Auslässe bei der inneren Wand der ringförmigen Kammer liegen.

9. Teichfilteranordnung nach Anspruch 5 oder einem der Ansprüche 6 bis 8, wenn abhängig von Anspruch 5, wobei die Antriebsplatte (4) zur Drehung auf einer Auflageplatte (5) angebracht ist, die in dem Gehäuse angebracht ist und gegen Drehung gehalten wird, wobei die Auflageplatte auf einem Kranzabschnitt (34) angebracht ist, der Vorsprünge aufweist, die mit entsprechenden Eingriffsabschnitten (51) in der Auflageplatte (5) ineinandergreifen, und wobei der Kranzabschnitt (34) und entsprechende Eingriffsabschnitte die Positionierung der Auflageplatte auf dem Kranz in einer ausgewählten einer Vielzahl von relativ gedrehten Stellungen ermöglichen und die Auflageplatte in der jeweiligen ausgewählten der Vielzahl von Stellungen gegen Drehung relativ zu dem Kranz halten.

10. Teichfilteranordnung nach Anspruch 9, wobei zwischen der Auflageplatte (5) und der Antriebsplatte (4) ein Radiallager gebildet ist, wobei das Radiallager ein Paar Auflageflächen aufweist, eine auf der Auflageplatte und eine auf der Antriebsplatte, wobei eine der Auflageflächen eine zylindrische Oberfläche aufweist, wohingegen die andere der Auflageflächen eine Vielzahl von radial vorstehenden Abschnitten zum Drücken auf die eine Auflagefläche aufweist.

11. Teichfilteranordnung nach einem der Ansprüche 9 bis 10, wobei eine von der Auflageplatte (5) und der Antriebsplatte (4) eine Axialauflagefläche aufweist und die andere von der Auflageplatte (5) und der Antriebsplatte (4) eine Vielzahl von vorstehenden Abschnitten zum Drücken auf die Axialauflagefläche aufweist, um die Antriebsplatte relativ zu der Auflageplatte axial abzustützen.

12. Teichfilteranordnung nach einem der vorangehenden Ansprüche, wobei der Filter einen mechanischen Filterbereich (16), einen biologischen Filterbereich (15) und einen UV-Filterbereich (14) umfasst, wobei der Strömungsweg durch den Filter von dem Gehäuseeinlass (12) zu dem UV-Filterbereich (14), dann zu dem biologischen Filterbereich (15), dann zu dem mechanischen Filterbereich (16) und dann zu dem Gehäuseauslass (12) ist.

13. Teichfilteranordnung nach einem der vorangehenden Ansprüche, umfassend eine Umgehung zum Ermöglichen, dass Wasser die Vielzahl von in der Kammer bereitgestellten Filtermaterialelementen umgeht (101, 102, 103).

14. Verfahren zum Betreiben eines Teichfilters (1), wobei der Teichfilter Folgendes umfasst: ein Gehäuse mit einem Fluideinlass (12) und einem Fluidauslass (13), eine Kammer (16) in dem Gehäuse zum Aufnehmen einer Vielzahl von Filtermaterialelementen, die in einem Strömungsweg zwischen dem Einlass und dem Auslass angeordnet ist, und ein in der Kammer angeordnetes Agitierelement (41) zum Agitieren von getragenen Filtermaterialelementen in einem Reinigungsprozess, wobei das Agitierelement (41) zur Drehung um eine Achse in der Kammer angeordnet ist und mindestens eine Seitenwand der Kammer zum Aufnehmen einer Vielzahl von Filtermaterialelementen mit vorstehenden langgestreckten Abschnitten (33a, 34a) versehen ist, die sich auf der Seitenwand quer zu einer Drehrichtung des Agitierelements um die Achse erstrecken, um der Drehung der Filtermaterialelementen entgegenzuwirken, wobei das Verfahren folgende Schritte umfasst:
Einbringen einer Vielzahl von komprimierbaren offenzelligen Schaumstoffabschnitten (2) in die Kammer (16);
Verwenden des Filters zum Filtern von Teichwasser; und
Reinigen des Filters, insbesondere der Schaumstoffabschnitte (2) durch Fortsetzen des Aufgebens von Wasser durch den Filter, während das Agitierelement (41) verwendet wird, um die Lagen der Schaumstoffabschnitte in der Kammer zu ändern und die Schaumstoffabschnitte relativ zueinander zu bewegen, um jegliche Kuchen von Schaumstoffabschnitten, die sich während des Filterns gebildet haben können, aufzubrechen.

## Revendications

1. Agencement formant filtre pour bassin comportant :
un filtre pour bassin (1) comportant un boîtier (11) ayant une entrée de fluide (12) et une sortie de fluide (13), une chambre (16) à l'intérieur du boîtier servant à recevoir une pluralité d'éléments de milieu de filtration (2) et qui est disposée dans un trajet d'écoulement entre l'entrée (12) et la sortie (13), et un élément d'agitation (41) disposé dans la chambre pour agiter les éléments de milieu de filtration portés au cours d'un processus de nettoyage et
une pluralité d'éléments de milieu de filtration (2) mis en oeuvre dans la chambre, dans lequel les éléments de milieu de filtration sont des parties en mousse compressible à alvéoles ouverts qui, sous l'action de l'élément d'agitation (41), sont libres de changer de place à l'intérieur de la chambre (16) et se déplacent les unes par rapport aux autres, dans lequel l'élément d'agitation (41) est agencé à des fins de rotation, autour d'un axe, à l'intérieur de la chambre,
et au moins une paroi latérale de la chambre servant à recevoir une pluralité d'éléments de milieu de filtration comporte des parties allongées faisant saillie (33a, 34a) qui s'étendent sur la paroi latérale de manière transversale par rapport à une direction de rotation de l'élément d'agitation autour de l'axe à des fins de résistance à la rotation des éléments de milieu de filtration.

2. Agencement formant filtre pour bassin selon la revendication 1, dans lequel il y a une paire d'éléments d'agitation (41), un premier des éléments d'agitation (41) étant monté à une première distance radiale par rapport à l'axe et un deuxième des éléments d'agitation (41) étant monté à une deuxième distance radiale, différente, par rapport à l'axe.

3. Agencement formant filtre pour bassin selon l'une quelconque des revendications précédentes, dans lequel chaque élément de milieu de filtration (2) a un volume qui représente 1 % ou moins du volume de la chambre.

4. Agencement formant filtre pour bassin selon l'une quelconque des revendications précédentes, dans lequel la dimension maximum de chaque partie en mousse (2) est de 50 mm.

5. Agencement formant filtre pour bassin selon l'une quelconque des revendications précédentes, dans lequel le filtre pour bassin comporte une plaque d'entraînement généralement annulaire (4) portant l'élément d'agitation (41) et agencée à des fins de rotation autour dudit axe dans le boîtier, dans lequel la plaque d'entraînement (4) est agencée à des fins de rotation par rapport à une lampe UV (14a) qui passe au travers d'une ouverture centrale dans la plaque d'entraînement (4) et l'agencement formant filtre pour bassin comportant une poignée (6) à des fins d'utilisation pour entraîner la plaque (4) par rotation, la poignée (6) étant agencée à des fins de rotation autour d'un axe qui est décalé par rapport à l'axe de rotation de la plaque d'entraînement (4) et des moyens de transmission (61, 44) étant mis en oeuvre pour transférer l'entraînement de la poignée (16) à la plaque d'entraînement (4).

6. Agencement formant filtre pour bassin selon l'une quelconque des revendications précédentes, qui comporte une partie formant seau (3) qui définit au moins partiellement la chambre servant à recevoir une pluralité d'éléments de milieu de filtration, dans lequel la partie formant seau (3) est en mesure d'être retirée du boîtier (11), et la partie formant seau (3) et la partie formant boîtier (11) ont chacune des parties de mise en prise (35b, 11c) à des fins de mise en prise mutuelle l'une par rapport à l'autre quand le seau (3) est en position dans le boîtier pour retenir le seau (3) contre toute rotation par rapport au boîtier (11).

7. Agencement formant filtre pour bassin selon la revendication 6, dans lequel les parties de mise en prise (35b, 11c) de la partie formant seau (3) et de la partie formant boîtier (11) permettent la mise en place du seau dans le boîtier dans une position sélectionnée parmi une pluralité de positions de rotation relative et retiennent le seau contre toute rotation par rapport au boîtier, quelle que soit la position de la pluralité de positions qui est sélectionnée.

8. Agencement formant filtre pour bassin selon l'une quelconque des revendications précédentes, dans lequel la chambre (16) est généralement annulaire et la chambre a des entrées (32) pour que le fluide à filtrer entre dans la chambre et des sorties (42) pour que le fluide sorte de la chambre, les entrées (32) étant à une extrémité de la chambre annulaire et les sorties (42) étant à l'autre extrémité de la chambre annulaire et ;
les entrée (32) étant vers la paroi intérieure de la chambre annulaire et les sorties (42) étant vers la paroi extérieure de la chambre annulaire ou les entrées étant vers la paroi extérieure de la chambre annulaire et les sorties étant vers la paroi intérieure de la chambre annulaire.

9. Agencement formant filtre pour bassin selon la revendication 5 ou selon l'une quelconque des revendications 6 à 8 quand dépendantes de la revendication 5, dans lequel la plaque d'entraînement (4) est montée à des fins de rotation sur une plaque d'appui (5) qui est montée dans le boîtier et retenue contre toute rotation, la plaque d'appui étant montée sur une partie formant couronne (34) ayant des parties saillantes qui se mettent en prise avec des parties de mise en prise correspondantes (51) dans la plaque d'appui (5), et dans lequel la partie formant couronne (34) et les parties de mise en prise correspondantes permettent la mise en place de la plaque d'appui sur la couronne dans une position sélectionnée parmi une pluralité de positions de rotation relative et retiennent la plaque d'appui contre toute rotation par rapport à la couronne, quelle que soit la position de la pluralité de positions qui est sélectionnée.

10. Agencement formant filtre pour bassin selon la revendication 9, dans lequel un appui radial est formé entre la plaque d'appui (5) et la plaque d'entraînement (4), l'appui ayant une paire de faces d'appui, l'une sur la plaque d'appui et l'autre sur la plaque d'entraînement, dans lequel l'une des faces d'appui a une surface cylindrique alors que l'autre des faces d'appui a une pluralité de parties faisant saillie dans le sens radial à des fins d'appui sur ladite une face d'appui.

11. Agencement formant filtre pour bassin selon l'une quelconque des revendications 9 à 10, dans lequel l'une parmi la plaque d'appui (5) et la plaque d'entraînement (4) a une surface d'appui axial et l'autre parmi la plaque d'appui (5) et la plaque d'entraînement (4) a une pluralité de parties faisant saillie à des fins d'appui sur la surface d'appui axial à des fins de support axial de la plaque d'entraînement par rapport à la plaque d'appui.

12. Agencement formant filtre pour bassin selon l'une quelconque des revendications précédentes, dans lequel le filtre comporte une région de filtre mécanique (16), une région de filtre biologique (15) et une région de filtre UV (14), le trajet d'écoulement au travers du filtre se faisant depuis l'entrée (12) du logement jusqu'à la région de filtre UV (14), puis jusqu'à la région de filtre biologique (15), puis jusqu'à la région de filtre mécanique (16) et puis jusqu'à la sortie (12) du boîtier.

13. Agencement formant filtre pour bassin selon l'une quelconque des revendications précédentes, comportant une dérivation pour permettre à l'eau de contourner (101, 102, 103) la pluralité d'éléments de milieu de filtration mis en oeuvre dans la chambre.

14. Procédé de fonctionnement d'un filtre pour bassin (1), le filtre pour bassin comportant un boîtier ayant une entrée de fluide (12) et une sortie de fluide (13), une chambre (16) à l'intérieur du boîtier servant à recevoir une pluralité d'éléments de milieu de filtration et qui est disposée dans un trajet d'écoulement entre l'entrée et la sortie, et un élément d'agitation (41) disposé dans la chambre pour agiter les éléments de milieu de filtration portés au cours d'un processus de nettoyage, dans lequel l'élément d'agitation (41) est agencé à des fins de rotation, autour d'un axe, à l'intérieur de la chambre, et au moins une paroi latérale de la chambre servant à recevoir une pluralité d'éléments de milieu de filtration comporte des parties allongées faisant saillie (33a, 34a) qui s'étendent sur la paroi latérale de manière transversale par rapport à une direction de rotation de l'élément d'agitation autour de l'axe à des fins de résistance à la rotation des éléments de milieu de filtration, le procédé comportant les étapes consistant à :
introduire une pluralité de parties en mousse compressible à alvéoles ouverts (2) dans ladite chambre (16) ;
utiliser le filtre pour filtrer l'eau du bassin ; et
nettoyer le filtre, en particulier les parties en mousse (2), en continuant à alimenter de l'eau au travers du filtre tout en utilisant l'élément d'agitation (41) pour changer les places des parties en mousse à l'intérieur de la chambre et pour déplacer les parties en mousse les unes par rapport aux autres de manière à morceler tout gâteau de parties en mousse ayant pu se former au cours de la filtration.
